(19) **Europäisches Patentamt**
**European Patent Office**
**Office européen des brevets**

(11) **EP 1 744 638 B1**

(12) **EUROPEAN PATENT SPECIFICATION**

(45) Date of publication and mention
of the grant of the patent:
**23.04.2008 Bulletin 2008/17**

(51) Int Cl.:
**A23K 1/18** (2006.01)  **A23K 1/00** (2006.01)

(21) Application number: **05741736.2**

(22) Date of filing: **12.05.2005**

(86) International application number:
**PCT/NO2005/000159**

(87) International publication number:
**WO 2005/110113 (24.11.2005 Gazette 2005/47)**

(54) **METHOD AND FEED FOR REDUCTION OF THE CONTENT OF UNDESIRED NUTRIENTS IN THE WATER DISCHARGED FROM A FISH FARM**

VERFAHREN UND FUTTER ZUR ABREICHERUNG VON UNERWÜNSCHTEN NAHRUNGSMITTELN IN ABWÄSSERN VON FISCHZUCHTBETRIEBEN

PROCEDE ET DISTRIBUTION POUR LA REDUCTION DE NUTRIMENTS INDESIRABLES DANS L'EAU D'EVACUATION EN PROVENANCE D'UNE PISCICULTURE

(84) Designated Contracting States:
**AT BE BG CH CY CZ DE DK EE ES FI FR GB GR HU IE IS IT LI LT LU MC NL PL PT RO SE SI SK TR**

(30) Priority: **13.05.2004 NO 20041973**
**25.04.2005 NO 20051993**

(43) Date of publication of application:
**24.01.2007 Bulletin 2007/04**

(73) Proprietor: **TROUW INTERNATIONAL B.V.**
**NL-5831 JN Boxmeer (NL)**

(72) Inventors:
• **KOPPE, Wolfgang M.**
**N-4011 STAVANGER (NO)**
• **BRINKER, Alexander**
**88212 RAVENSBURG (DE)**
• **ROEM, Andries, Jan**
**NL-7316 AV Apeldoorn (NL)**

(74) Representative: **Smart, Peter John**
**Beck Greener**
**Fulwood House,**
**12 Fulwood Place,**
**London WC1V 6HR (GB)**

(56) References cited:
**WO-A1-87/05051**          **WO-A1-94/03073**

• **DATABASE WPI Week 198045, Derwent Publications Ltd., London, GB; Class C03, AN 1980-79855C, XP003003471 & JP 55 124 461 A (NIKKAIKEN KK) 25 September 1980**
• **STOREBAKKEN T. ET AL: 'Binders in Fish Feeds II. Effect of Different Alginates on the Digestibility of Macronutrients in Rainbow Trout' AQUACULTURE vol. 60, 1987, pages 121 - 131, XP008073366**
• **STOREBAKKEN T.: 'Binders in Fish Feeds I. Effect of Alginate and Guar Gum on Growth, Digestibility, Feed Intake and Passage Through the Gastrointestinal Tract of Rainbow Trout' AQUACULTURE vol. 47, 1985, pages 11 - 26, XP008073365**

**Description**

The invention relates to a method for reducing the content of undesired nutrients in water discharged from a fish farm; more particularly by feeding farmed fish a farming feed, to which there has been added an ingredient, which increases the particle size of trout faeces, the faeces subsequently being removed from the discharge water by mechanical filtration. The invention also includes a farming feed for use in the practising of the method.

Fish farming in freshwater represents a source of pollution in that feed remnants and faeces in solid and dissolved form may bring undesired nutrients into an adjacent river system via the discharge water from the farm. The supply of phosphorus, in particular, is considered to be a problem area in the trade.

The content of nutrients is attempted reduced by using easily digestible feed, by preventing feed loss, by technically good quality of the farm and by treatment of the discharge water.

Even though many measures have proved effective, an additional potential of improvement is considered to be relatively small due to physical, biological and economic restrictions.

The discharge water from a typical trout farm in freshwater exhibits the following characteristics:

-    the faeces, present to a great extent as suspended particles, contain most of the phosphorus, most of the biologically degradable material and a considerable part of the total nitrogen content. Mechanical treatment of the discharge water still shows great variations in the effect of the treatment. (Cripps, S. J. (1994): Minimizing outputs: treatment. Journal of Applied Ichtyology, 10, 284-294):

*Table 1: Percentage of particle-bound polluting substances in proportion to the total amount, and effectiveness of drum filtration of discharge water from trout farms*

|  | particle-bound fraction | Removed through treatment | |
|---|---|---|---|
|  |  | Lower limit | Upper limit |
| Total amount of phosphorus | Up to 90 % | 47 % | 84 % |
| Total amount of nitrogen | Up to 32 % | 7 % | 32 % |
| $BOD_5$ | Over 80 % | 21 % | 80 % |
| Solids | - | 19 % | 91 % |
| $BOD_5$ = Biological Oxygen Demand | | | |

A main reason for these differences is the disintegration of the suspended faeces particles into finer and more soluble particles. The disintegration occurs because the shear forces in turbulent zones of the water, formed for example by moving fish, pumps, drop in flow rate etc., will break the particles down.

The invention has as its object to remedy the drawbacks of the prior art.

The object is achieved through features specified in the description below and in the following Claims.

The object is achieved by increasing the shear resistance of the faeces particles, so that decomposition into smaller= size particles is prevented.

In industrial rearing of fish, so-called dry feed is the feed type used the most. This dry feed was earlier so-called pressed feed, but this has been replaced more and more by so-called extruded feed. Common to both feed types is that they are sold as dry particles or pieces of feed. These pieces of feed are referred to as pellets. The pellets are mainly of a cylindrical shape, the diameter/length ratio typically being from 1:1 to 1:2. Fish of different sizes require differently sized pellets. Thus, the diameter may vary from 1 mm to 12 mm. Pellets of other sizes and shapes also exist.

In the production of fish feed it is usual to add a binder to the feed mixture before shaping in a press or an extruder. This is advantageous for imparting to the pellets a mechanical strength great enough for them to maintain their shape until feeding. Too poor strength will result in the pellet breaking or being crushed during storage and transport, and this will result in a loss as dust and small fragments of fish feed cannot be fed to fish. The mechanical strength is also necessary in order for the pellet to withstand handling in the feeding plant and for it not to dissolve in water before the fish eats it.

The most commonly used binder is starch. When heated together with water and steam, the starch granules will swell and form a starch network. This happens partly in a so-called preconditioner, partly in the press if one is used, and partly in the extruder if one is used. Some extruders are operated without a preconditioner, so that the entire process takes place in the extruder.

The starch source used the most is wheat. For economic reasons whole wheat is used, which is ground together with the rest of the raw materials included in the recipe for the fish feed. If the recipe is "tight", wheat flour may be used. Other starches providing binding are potato starch and corn starch, but also other starches, such as tapioca, can be used. Wheat contains the protein gluten. This particular protein will also contribute to binding together the other ingredients of fish feed.

Many species of fish can make use of raw starch only to a limited degree. Salmonids, for example, have low digestibility of raw starch, but can, to a greater degree, digest boiled starch. Therefore, the extrusion technique is particularly advantageous because most of the starch will be boiled in the course of the process.

The content of starch varies from feed type to feed type. In recipes, in which a high content of both digestible protein and digestible fat is desired, the wheat content is low. A wheat content of about 8 % (dry weight basis) is representative of such recipes. In other recipes there may be a wish for proportionately smaller amounts of both digestible protein and digestible fat. In such recipes fillers are required, and whole wheat is suitable for this purpose because wheat is a cheap raw material for the fish feed industry. In such recipes the wheat content may exceed 20 % (dry weight basis).

It is also known to use other binders for the preparation of fish feeds. In some connections it is desirable to use fresh or frozen fish mass as an ingredient. In such feeds it is usual to use polymers like alginates and guar gum as a binder. Such polymers are considered to be indigestible to fish. This is a drawback in itself, and in addition, it is known that alginate and guar gum reduce the digestibility of protein and of fat. Thus, Storebakken shows (Storebakken, T. (1985): Binders in fish feeds. I. Effect of alginate and guar gum on growth, digestibility, feed intake and passage through the gastrointestinal tract of rainbow trout. Aquaculture, 47, 11-26) that the digestibility of protein and the digestibility of fat decrease with increasing amounts of these binders in the feed. The negative effect was the largest for guar gum. In this work the lowest.admixture was 2 % of either alginate or guar gum, whereas the highest admixture was 10 %. In the experiments concerning digestibility, no other binders were used. Storebakken also reported that the water content in the fish's faeces increased with the use of a binder relative to feed, which did not contain a binder. In subsequent work, in which Storebakken investigated the importance of the viscosity of the binder, six different types of alginates were used as binders. In this study 5 % of alginate was used. The conclusions were the same: Protein digestibility and fat digestibility were lower than for the control feed without a binder, and the dry substance content in the fish's faeces was lower than when feeding with the control feed. (Storebakken, T. (1987): Binders in fish feeds. II. Effect of different alginates on the digestibility of macronutrients in rainbow trout. Aquaculture, 60, 121-131).

It has now surprisingly turned out that by mixing smaller amounts of indigestible binders of the non-starch type (hereinafter also called faecal binders), such as alginates and guar gum, into fish feed, in which starch is used as the ordinary binder, there is achieved that the faeces particles get a better shear resistance. At the same time, it surprisingly turns out that the protein digestibility and fat digestibility are not negatively affected and that the dry substance content of the faeces is not changed either. Faecal binders may affect the viscosity, elasticity and structural stability of feed substances during digestion and defecation. The addition of faecal binders to a fish feed may also be used to adjust the stability of faecal particles when these are in water. For this purpose only very small amounts of one or more indigestible binders are required, as this/these will concentrate during digestion and achieve its/their active concentration the furthest out in the intestinal tract.

This is advantageous for biological reasons, as negative effects on digestibility are prevented or minimized.

Based on these effects, the addition of certain faecal binders to farming feed for freshwater fish, especially salmonids, will bring about in an increase in the hydromechanical stability of the faecal particles, that is to say that the particles will, to a greater degree, resist the disintegrating effect of the water movement, as the shear resistance increases. Increased shear resistance reduces the disintegration of the particles when they are exposed to shear forces, that is to say that when particles of different shear resistance are subjected to the same hydromechanical load, stabilized particles will maintain a larger dimension. Big particles will more efficiently be separated by mechanical treatment in, for example, a filter or sedimentation basin. In addition, a larger portion of the total content of nutrients will be bound in the particles because leakage from larger particles is reduced due to a reduced water contact surface.

Thus, the invention relates to a farming feed for fish in freshwater, the feed being of a pressed or extruded type and containing starch as an ordinary binder, there being added to the feed up to 25 g per kg of constituent feed ingredients of an algae meal, a calcium alginate or guar gum as a faecal binder of a non-starch type.

The concentration of algae meal is advantageously from 1 to 20 g per kg of constituent feed ingredients, more advantageously from 1 to 5 g per kg of constituent feed ingredients.

The concentration of calcium alginate is advantageously from 5 to 15 g, more advantageously from 8 to 12 g per kg of constituent feed ingredients.

The concentration of guar gum is advantageously from 1 to 10 g, more advantageously from 1 to 5 g per kg of constituent feed ingredients.

The faecal binder of a non-starch type may be a combination of two or more of the binders in the group consisting of algae meal, calcium alginate and guar gum.

The invention also includes a method for reducing the content of undesired nutrients in discharge water from a fish farm, wherein there is added to the feed ingredients mixture for a farming feed of a pressed or extruded type and containing starch as an ordinary binder, an addition of up to 25 g per kg of constituent feed ingredients of a said faecal binder of a non-starch type; the fish is fed the pressed or extruded farming feed and the faeces are removed from the fish farm.

The faecal binder, which is used in said method, is advantageously a combination of two or more of the binders in the group consisting of algae meal, calcium alginate and guar gum.

By the expression "constituent feed ingredients" is meant the actual amounts of different raw material ingredients on a wet weight basis, including fats like fish oil and vegetable oil, that are included in the feed mixture for the production of the pressed or extruded feed, before a possible, necessary addition of water for the pressing or extrusion process and before a possible, necessary removal of water in the drying process following the pressing or extrusion process.

The term "feed ingredients mixture" directs to the same conditions as described for "constituent feed ingredients".

In what follows, there are described non-limiting examples of preferred embodiments, which are visualized through the description of laboratory experiments and appended figures; in which:

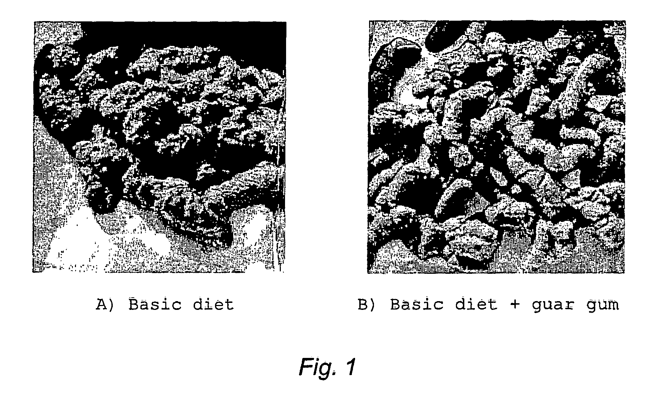

Figure 1    shows the visual difference in the stability of faeces from trout fed a basic diet (A) and from trout fed the same basic diet with the addition of guar gum as a faecal binder (B), the faeces having been collected by dissection of the intestinal tract;

Figure 2    shows the viscosity and elasticity modules in faecal samples from trout, depending on the content of faecal binder in diets used;

Figure 3    shows volume-dependent cumulative size distribution of suspended particles after disintegration by defined hydromechanical load, depending on the content of faecal binder in diets used; and

Figure 4    shows particulate content of nitrogen and phosphorus in suspended solids with increasing particle size after washing for 1 hour (average + standard deviation).

**Materials and methods**

Diets and faecal binders - preliminary experiments

In the preliminary experiments the basic diet is compared with different treatments, in which different binders in certain concentrations have been added to a basic diet. The following binders were used: Lignin sulphonate, algae meal, modified (non-gelatinized) starch, calcium alginate, fish gelatine, guar gum, solid starch and cellulose powder.

The diet was given to groups of rainbow trout for minimum 5 weeks. Extruded feed of a 3.0 mm or 4.5 mm pellet size was used. The basic diet compositions were comparable with feed mixtures of ordinary commercial goods. By dissection faecal samples were removed from the lower part of the rectum, and macroscopic examinations of these and of faeces deposited at the bottom of the vessel, and sedimentation experiments carried out in Imhoff cones were used in order to find the effects of binders on the stability of the faecal particles. Apparent digestibility (raw protein, raw lipid), specific growth and utilization of feed were measured in order to find possible negative effects of binders on the feed quality.

The faecal binder concentrations that gave the most stable faecal particles without affecting digestibility, growth and feed absorption, were used in the further two feeding experiments.

Rainbow Trout Farming

Rainbow trout (Oncorhynchus mykiss, all females of the Hofer stock) were fed in circular green fibreglass vessels (diameter 1 m, height 0.7 m) with a water volume of 0.5 m$^3$.

The fish were of a conventional, unspecified microbiological status. Fish-pathogen-free water was provided from a groundwater well. Inflowing water was treated by aeration with small bubbles to remove elementary nitrogen and carbon dioxide as well as to add oxygen until hear saturation. The water was supplied to each vessel through a vertical PVC inlet pipe at a 45° angle. The inlet was tangentially oriented near the wall of the vessel to provide a slightly circular flow, in which the fish could orientate. The self= cleaning form of the vessel provided for all the faeces to be carried to a central drain, which was covered with a perforated plate (plate diameter 0.2 m with a hole diameter of 0.01 m). It was, therefore, unnecessary to clean the vessels. The water flow rate was adjusted to 7-9 1/min. The vessels were lit daily for 12 hours (between 0700 and 1900) without dusk. Oxygen content ($\pm$ 0.1 mg O$_2$/l), pH ($\pm$ 0.1) and temperature ($\pm$ 0.1 °C) was measured daily an hour and a half after manual feeding at the water inlet. The water parameters were measured in accordance with the German standard method of analysing water, wastewater and slurry (modified in accordance with Gewasserschutzkommission, Dem Bodensee in den Abflussjahren 1996 und 1997 zugeführte Stofffrachten, p. 42. Internationale Gewässerschutzkommission für den Bodensee, 2000), carried out as described above, but only in the beginning and closing of each experiment. The water parameters were all within the recommended area for rainbow trout farming. The average figures were:

| Parameter | Experiment 1 | Experiment 2 |
|---|---|---|
| Oxygen (mg/l) (pt) | 8.1 | 7.8 |
| pH (pt) | 8.1 | 8.1 |
| Temperature °C | 11.7 | 13.2 |

| Experiments 1 and 2 | | | | | | | | |
|---|---|---|---|---|---|---|---|---|
| $NH_4$-N (mg/l) | $NO_2$-N mg/l) | $NO_3$-N (mg/l) | Chloride (mg/l) | Sulphate (mg/l) | $PO_4$-P (mg/l) | Conductivity ($\mu$S/cm) | Buffer capacity (mmol/l) | Earth alkaline ions (mmol/l) |
| 164.8 | 2.6 | 1889 | 7.4 | 18.8 | 72 | 580 | 6.5 | 19.7 |

In Experiment 1 a total of 75 trout per vessel were fed experimental diets, and in Experiment 2 a total of 99 trout per vessel. For the different experiments groups of trout were selected, anaesthetized and killed (n = 15, 25 or 30 per vessel). Initial average weight of the trout was in Experiment 1 184 g and in Experiment 2 191 g.

Feeding and diet composition

**Table 2. Faecal binders used**

| Faecal binder | Product specification | Characteristics (solubility*, viscosity, gel strength*, digestibility) | Price level | Quantity added |
|---|---|---|---|---|
| Algae meal | ALGIBIND (p.c. 5221025), Algae a.s. | Soluble in cold water, low viscosity, low gel strength, partially digestible | Low | 0.1-2 % |
| Calcium alginate | ALGINATE (Scogin HV Alginate-2205000, FMC BioPolymer | Soluble in cold water, medium viscosity, medium gel strength, indigestible | High | 1 % |
| Guar gum | | Soluble in cold water, very high viscosity, high gel strength, indigestible | Medium | 0.1-1.0 % |
| *) Concentration-dependent viscosity and gel strength according to information from distributor. | | | | |

The fish was fed 1.2 % of its body weight six days per week (Monday to Saturday). About 40 % of the daily ration was given manually under continuous observation of behaviour at inlet between 0730 and 0900. The remaining feed was given by means of a feeding machine that fed continually until 1800. With this feeding pattern the initial experiments gave excretion of faeces at about 1000.

Six diets were formulated (see Table 2). They differed from each other only in the content of faecal binder. The diets all contained the same amounts of protein and energy. They contained balanced levels of amino acids, fatty acids, vitamins and minerals and are above recommended levels (Council N.R.: Nutrient requirements of fish, Committee on Animal Nutrition, Board of Agriculture, 1993). The faecal binder was added as dry powder to the other dry ingredients before extrusion of the mass. The diets were extruded (maximum values at the extruder matrix 120 °C, 22 bars) with a diameter of 4.5 mm.

The basic diet contained per kg of feed:

| | |
|---|---|
| Fish meal | 305.09 g |
| Semi-concentrate soy (Hamlet protein): | 200.00 g |
| Corn gluten: | 192.80 g |
| Wheat | 122.23 g |
| Monocalcium phosphate[a]: | 6.61 g |
| Fish oil: | 168.00 g |
| Mineral mixture[b]: | 2.35 g |
| Vitamin mixture[c]: | 2.35 g |
| Lycine HCl: | 3.00 g |
| Carophyll pink: | 0.60 g |
| Yttrium oxide[d]: | 0.10 g |

a) Available phosphorus 4.71 g/kg.
b) The mineral mixture contained:

calcium 150 g/kg, magnesium 8000 mg/kg, potassium 120 mg/kg; iron 10000 mg/kg, zinc 35000 mg/kg, manganese 4000 mg/kg, copper 800 mg/kg, selenium 25 mg/kg, iodine 50 mg/kg.

c) The vitamin mixture contained:

Vit A 550000 IU/kg, Vit D 420000 IU/kg, Vit E 45000 mg/kg, Vit K 2500 mg/kg, Vit B1 2200 mg/kg, Vit B2 4100 mg/kg, Vit B6 4500 mg/kg, Vit B5 13000 mg/kg, Niacin 15000 mg/kg, Folate 900 mg/kg.

d) Yttrium oxide was added as a marker for measuring digestibility.

**Table 3. Addition of a faecal binder to the experimental diets**

| Faecal binder | Unit of measurement | Diet 1 BD | Diet 2 GG 0.1 | Diet 3 GG 0.3 | Diet 4 AB1 | Diet 5 AB2 | Diet 6 AT1 |
|---|---|---|---|---|---|---|---|
| Guar gum (GG) | g/kg | | 1.00 | 3.00 | - | - | - |
| Algibind (AD) | g/kg | - | - | - | 3.00 | 6.00 | - |
| Alginate (AT) | g/kg | - | - | - | - | - | 10.00 |

Digestibility, specific growth, utilisation of feed

For digestibility measurement 54 trout per treatment in Experiment 1 and 75 trout per treatment in Experiment 2 were anaesthetized with clove oil (concentration 0.1 ml/l, time of exposure approximately 1 min.) and faeces were removed from the anal orifice. The faeces were frozen immediately in cryogen, freeze-dried and homogenzied. The content of dry substance, protein, fat, phosphorus and yttrium oxide was determined. The digestibility of protein, fat and phosphorus of the different diets was estimated.

The dry substance content was determined as the ratio of wet weight and dry weight after freeze-drying. Raw protein was analysed in accordance with the EU Commission Directive 93/28/EEC (the Kjeldahl method), but with selenium as catalyst. Raw lipid was analysed according to the EU Commission Directive 84/4EEC (method B), but with diethyl ether as the solvent. Phosphorus and yttrium were determined externally (Jordforsk, Ås, Norway). To the samples were added 10 ml of 6M nitric acid (p.a.) and 0.5 ml of hydrogen peroxide (p.a.) in a microwave oven and diluted with distilled water. Finally the samples were analysed in an ICP-AES (Inductively Coupled Plasma-Atomic Emission Spectrometer). The wet weight of the fish was determined individually ($\pm$ 1 g) right after killing for the subsequent samples of dissected faeces. Specific growth rate was determined as:

$$SGR\,[\%] = 100 * \frac{\ln_{(finishing\ weight)} - \ln_{(starting\ weight)}}{T_{(finishing\ date)} - t_{(starting\ date)}}$$

The feed conversion rate was calculated as

$$FCR = \frac{Feed\,[kg]}{Growth\,[kg]}$$

The collecting of faecal samples

For rheology and particle size recording certain groups of trout were taken from each vessel, anaesthetized with clove oil (0.1 ml/l, 1 min.) and killed by a blow to the head. The faecal particles nearest to the anal orifice were removed by dissection. Only clearly mucus-covered faecal particles were used. The faeces were placed in aluminium dishes, hermetically sealed with a plastic film in order to prevent dehydration, and then cooled to 4 °C to slow down microbial decomposing processes. All measuring was finished within 8 hours after dissection. Faeces and intestines were examined macroscopically to detect irritated mucous membranes in the intestines, exudative enteritis (running intestinal inflammation) and haemorrhoid enteritis (bleeding intestinal inflammation).

Rheological measurement

For rheological measurement 15 trout (Experiment 1) and 25 trout (Experiment 2) were picked out as above. Depending on the size, three to four faecal particles (necessary volume per measuring $\approx 3$ cm$^3$) were combined and transferred to a rheometer (Paar Physica UDS 200). The applied measuring method was MP 313 (plate diameter 50 mm, 0°) with a gap of 1 mm. The shear load factor was 2.0371833 and the shear rate factor was 2.6179939. Measuring time was 12 seconds. In the time recording there was used a deformation with an amplitude of $\gamma = 60$ % at a frequency of 1 Hz. For frequency recording there was used a deformation with an amplitude of $\gamma = 40$ % at frequencies of 50; 32.1; 20.6; 13.2; 8.47; 5.43; 3.49; 2.24; 1.43; 0.92; 0.59; 0.38; 0.24; 0.16 and 0.10 Hz. Measuring time was 30 seconds. The temperature in the experiment unit was set at 4 °C and air moisture was adjusted to 100 % saturation. All measurements were checked for deformation. Each measurement started with a time sweep of 50 single deformations, followed by frequency sweep after a 60 seconds' delay.

Particle size distribution

For particle size measuring 15 trout (Experiment 1) and 30 trout (Experiment 2) were picked out as above. First faecal particles from the control, having a weight of 2 g, were broken under prescribed conditions until they showed the same particle size distribution (PSD) as observed in discharge water from trout farms. This was carried out by a method in which turbulence is provided by a constant flow of air from below in 2 l of distilled water. The predetermined setting, that is to say 0.05 MPa and exposure time of 8 minutes, was used in all the experiments. The amount of faeces was 2 g ($\pm 0.01$ g) wet weight for Experiment 1 and 3 g ($\pm 0.01$ g) wet weight for Experiment 2. The particle size measuring was carried out with the use of a non-invasive laser particle sizer (GALAI: CIS-1) equipped with a flow control (GALAI: LFC-100) and a flow-through cell (GALAI: GM-7). AS the upper measuring limit for a laser particle sizer is 600 $\mu$m, all values were corrected by the percentage of particles larger than 600 $\mu$m. This value was determined by the use of a sieve.

**Results**

Experiment 1

Digestibility, specific growth rate, utilization of feed

- Specific growth rate was 1.13 % $\pm$ 0.069 % (average vessel mean $\pm$ standard deviation).

- Average feed conversion rate was 0.90 ± 0.046.

- At the end the average weight was 257 to 292 g.

- No macroscopically determinable traces of faecal binder could be pointed out in the intestinal tract.

- In up to two individuals per treatment slight intestinal irritation (rubor) was observed, but this was also observed in the control groups.

- Three individuals fed different diets showed presence of haemorrhoid enteritis.

- The faecal binder did not affect the observed digestibility of protein, lipid and phosphorus (see Table 4).

**Table 4. The effect of faecal binder treatment on the digestibility coefficient (%) of protein, lipid and phosphorus.**

| Feed | Protein | Lipid | Phosphorus |
|---|---|---|---|
| Basic diet | 87.2 % | 90.1 % | 48.2 % |
| + Guar gum (0.1 %) | 87.3 % | 91.6 % | 47.9 % |
| + Guar gum (0.3 %) | 85.6 % | 89.0 % | 51.0 % |
| + Algibind (0.3 %) | 86.9 % | 92.5 % | 47.0 % |
| + Algibind (0.6 %) | 86.6 % | 90.7 % | 53.3 % |
| + Alginate (1.0 %) | 88.3 % | 90.8 % | 56.5 % |

Experiment 1

Rheological measurement

At least three repetitions were carried out. The measurement of the guar gum (0.1 %) treatment gave incorrect values because of an error in the control program of the rheometer. These measurements were removed from the analyses.

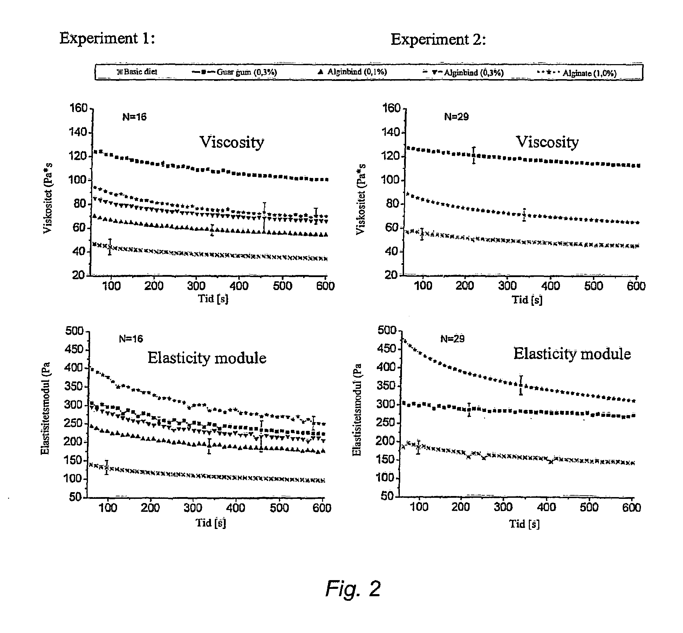

The addition of all faecal binders used gave a significant improvement in the viscosity and the elasticity modulus in faeces from fish (Figure 2, Table 5). This is the clearest in Experiment 1. The basic diet gave in Experiment 1 less stable faecal particles than in Experiment 2 (Figure 2). Compared with the basic diet, guar gum led to the greatest increase in viscosity (183 %) and Alginate lead to the greatest increase in the elasticity module (173 %). In a combination of both visco-elasticity parameters guar gum gave the best result (155.5 %) followed by Alginate (136 %).

All visco-elastic functions show a weakening over time, which is the most evident for the elasticity module of the Alginate member.

Algibind is used in two different amounts in Experiment 1. The viscosity module as well as the elasticity module increased significantly with increased content,

**Table 5. Adjusted average value for viscosity and elasticity modules in faeces from trout fed a basic diet or a basic diet with faecal binder added.**

| Diet | Viscosity | | Elasticity module | |
|---|---|---|---|---|
| | Average | Improved | Average | Improved |
| Basic diet | 38.6 Pas | - | 110.7 Pa | - |
| + Guar gum (0.3 %) | 109.3 Pas | +183 % | 252.5 Pa | +128 % |
| + Algibind (0.1 %) | 59.6 Pas | +54 % | 197.2 Pa | +78 % |
| + Algibind (0.3 %) | 72.4 Pas | +88 % | 235.2 Pa | +112 % |
| + Alginate (1.0 %) | 77.4 Pas | +100 % | 302.5 Pa | +173 % |

Experiment 1

Particle size distribution

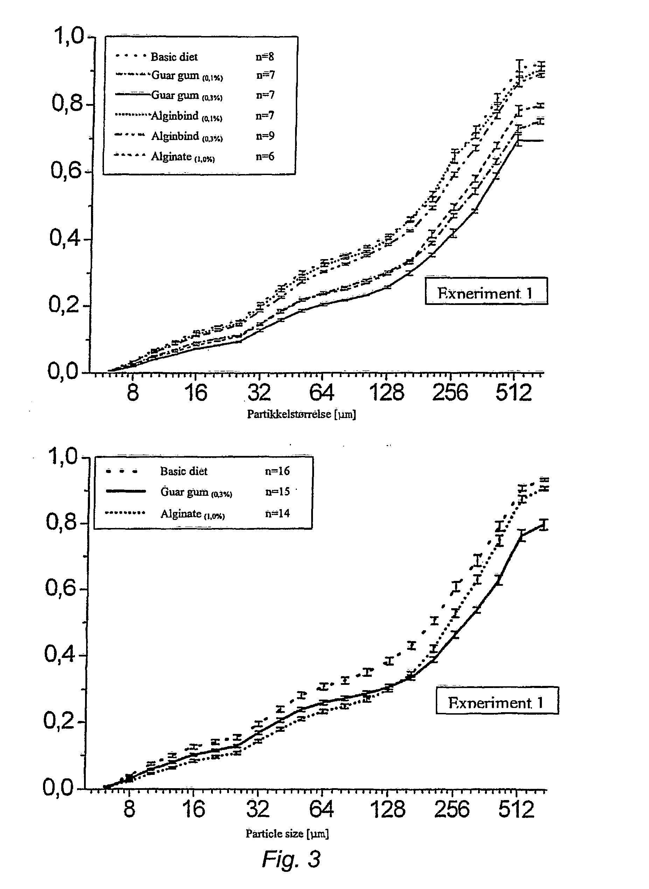

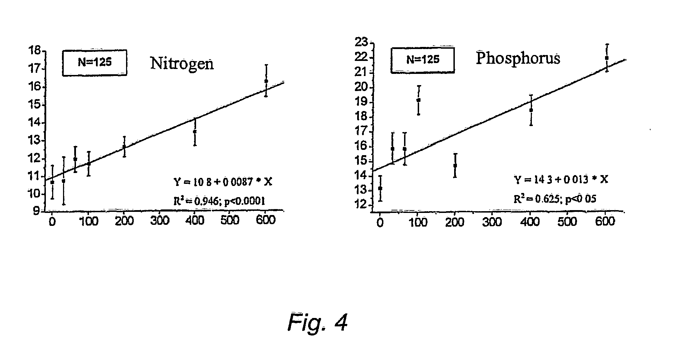

All particle size distribution observed in faeces from fish fed diets containing a faecal binder showed increased particle size (see Figure 3). The effect on particle size was increased with an increase in the content of the respective faecal binder (Figure 4, Table 6). Guar gum gave the best improvement. In general the effect was more evident with increased particle size.

Table 6 shows the percentages of the total particle amount under 100 $\mu$m and under 600 $\mu$m, respectively, depending on treatment. Guar gum and Alginate resulted in a significantly smaller amount of particles under both sizes, whereas Algibind did not give the same effect. By means of the filtering potential connected with a suspension of these size characteristics, the effect on the content of particles in the discharge water may be calculated by proportionality. With the addition of guar gum (0.3 %) the amount of particles up to the size of 100 $\mu$m in the discharge water was reduced by 40.2 % and 600 $\mu$m by 24.6 %, whereas for Alginate (1.0 %) a reduction of 30.6 % was found for the size 100 $\mu$m and 13.3 % for 600 $\mu$m.

**Table 6. Percentage of total particle volume under 100 $\mu$m and under 600 $\mu$m of suspended fish faeces particles from fish fed the same basic diet with different content of faecal binder. Improved = percentage improvement relative to basic diet in remaining waste load after filtering at 100 $\mu$m and 600 $\mu$m.**

| Diet | At 100 $\mu$m | | At 600 $\mu$m | |
|---|---|---|---|---|
| | Cumulative % | Improved | Cumulative % | Improved |
| Basic diet | 38.8 | - | 92.0 | - |
| + Guar gum (0.1 %) | 27.8 | -28.3 % | 75.2 | -18.3 % |
| + Guar gum (0.3 %) | 23.2 | -40.2 % | 69.4 | -24.6 % |
| + Algibind (0.1 %) | 36.3 | -6.4 % | 90.4 | -1.7 % |
| + Algibind (0.3 %) | 35.1 | -9.5 % | 89.1 | -3.2 % |
| + Alginate (1.0 %) | 26.9 | -30.6 % | 79.8 | -13.3 % |

Experiment 2

Digestibility, specific growth rate, utilization of feed

- Specific growth rate was 1.11 % $\pm$ 0.082 % (average vessel mean $\pm$ standard deviation).

- Average feed conversion rate was 0.73 $\pm$ 0.026.

- At the end the average weight was 417 to 490 g.

- None macroscopically determinable traces of faecal binder could be pointed out in the intestinal tract.

- In up to two individuals per treatment slight intestinal irritation (rubor) was observed, but this was also observed in the control groups.

- Three individuals fed different diets showed presence of haemorrhoid enteritis.

- The faecal binder did not affect the observed digestibility of protein, lipid and phosphorus (see Table 7).

**Table 7. The effect of faecal binder treatment on the digestibility coefficient (%) of protein, lipid and phosphorus.**

| Feed | Protein | Lipid | Phosphorus |
|------|---------|-------|------------|
| Basic diet | 89.7 % ±0.17 % | 95.7 % ±0.25 % | 46.7 % ±0.23 % |
| + Guar gum (0.3 %) | 89.1 % ±0.23 % | 94.6 % ±0.45 % | 51.5 % ±0.90 % |
| + Alginate (1.0 %) | 89.4 % ±0.09 % | 95.98 % ±0.13 % | 50.4 % ±0.36 % |

Experiment 2

Rheological measurement

At least nine repetitions were carried out. The measurement of the guar gum (0.1 %) member gave incorrect values because of an error in the control program of the rheometer. These measurements were removed from the analyses.

The addition of all faecal binders used gave a significant improvement in the viscosity and the elasticity modulus in faeces from fish (Figure 2, Table 8). This is more evident in Experiment 1 than in Experiment 2. The basic diet gave in Experiment 2 more stable faecal particles than in Experiment 1 (Figure 2). Compared with the basic diet, guar gum lead to the greatest increase in viscosity (140 %) and Alginate lead to the greatest increase in elasticity module (125 %). In a combination of both visco-elasticity parameters guar gum gave the best result (108.5 %) followed by Alginate (86.5 %).

All visco-elastic functions show a weakening over time, which is the most evident for the elasticity module for the Alginate member.

**Table 8. Adjusted average value for viscosity and elasticity modules in faeces from trout fed a basic diet or a basic diet with faecal binder added.**

| Diet | Viscosity | | Elasticity module | |
|------|-----------|---------|-------------------|---------|
| | Average | Improved | Average | Improved |
| Basic diet | 49.4 Pas | - | 161.2 Pa | - |
| + Guar gum (0.3 %) | 118.3 Pas | +140 % | 284.6 Pa | +76 % |
| + Alginate (1.0 %) | 72.5 Pas | +47 % | 362.6 Pa | +125 % |

Experiment 2

Particle size distribution

All particle size distribution observed in faeces from fish fed diets containing faecal binders showed an increased particle size (see Figure 3). The effect on particle size was increased with an increase of the content of the respective faecal binder (Figure 4, Table 9). The reduced effect of faecal binder in Experiment 2 is in agreement with the corresponding reduced effect on the visco-elasticity parameters in Experiment 2. Guar gum gave the best improvement. The effect is less evident in Experiment 2, in which Alginate showed the best effect for particle size under 128 μm. Generally, the effect was more evident with increased particle size.

Table 9 shows the percentage of the total amount of particles under 100 μm and under 600 μm, respectively, depending on treatment. Guar gum and Alginate resulted in a significantly smaller amount of particles under both sizes, whereas Algibind did not give the same effect. By means of the filtering potential connected with a suspension with these size characteristics, the effect on the content of particles in the discharge water may be calculated by proportionality. With the addition of guar gum (0.3 %) the amount of particles up to the size of 100 μm in the discharge water was reduced by 18.2 % and 600 μm by 14.7 %, whereas for Alginate (1.0 %) a reduction of 23.3 % was found for the size 100 μm and 2.9 % for 600 μm.

**Table 9. Percentage of total particle volume under 100 $\mu$m and under 600 $\mu$m of suspended fish faeces particles from fish fed the same basic diet with different content of faecal binder. Improved = percentage improvement relative to basic diet in remaining waste load after filtration at 100 $\mu$m and 600 $\mu$m.**

| Diet | At 100 $\mu$m | | At 600 $\mu$m | |
|---|---|---|---|---|
| | cumulative % | Improved | Cumulative % | Improved |
| Basic diet | 35.1 | - | 93.4 | - |
| + Guar gum (0.3 %) | 28.7 | -18.2 % | 79.7 | -14.7 % |
| + Alginate (1.0 %) | 26.9 | -23.3 % | 90.7 | -2.9 % |

The effect of the particle size on the washing process

Washing experiments with 125 faecal suspensions from an earlier experiment showed a significant increase in nitrogen and phosphorus content with increasing particle size (see Figure 4), which indicates that larger particles have a greater potential for retaining these substances.

In order to investigate the washing effects of the faecal binder addition, the starting material of faeces must be identical with respect to dry weight and nutrient content. The dry weight of faeces from 75 trout per vessel was determined with one repetition per binder member. The dry weight of the control member (basic diet) was 11.4 % ($\pm$ 0.2 %) (average $\pm$ standard deviation), for guar gum (0.3 %) 11.6 % $\pm$ 0.3 %, and for Alginate (1.0 %) 10.9 % $\pm$ 0.1 % without any statistically significant differences. Neither were there any significant differences in nutrient content.

For the control member and guar gum (0.3 %) (n=15) and for Alginate (1.0 %) (n=16) samples of 3 g of faeces were washed for 1 hour. The remaining solids showed no significant difference in the content of nitrogen or phosphorus (see Table 10). A significantly higher content of dry substance (+ 5 %) and particulate phosphorus (+ 14.9 %) could be observed in faeces from the guar gum member compared with the basic diet. Alginate treatment showed no significant increase in the retention of solids in the form of dry substance, nitrogen or phosphorus compared with the control member (basic diet).

**Table 10. Average values for remaining total of dry substance (TS), particulate nitrogen (N) and particulate phosphorus (P) after suspension of 3 g trout faeces samples for 1 hour in distilled water with different treatments (average $\pm$ standard deviation)**

| Diet | TS [mg] | Improvement | NH$_4$-N [mg] | Improvement | PO$_4$ [mg] | Improvement | P [%] | N [%] |
|---|---|---|---|---|---|---|---|---|
| Basic diet n=15 | 236.9 $\pm$ 4.4 | - | 6.452 $\pm$ 0.205 | - | 7.717 $\pm$ 0.265 | - | 3.3 $\pm$ 0.89 | 2.7 $\pm$ 0.94 |
| + Guar gum (0.3 %); n=15 | 249.5 5 $\pm$ 3.3 | +5.1 % | 6.324 $\pm$ 0.328 | -1.9 9 % | 8.863 $\pm$ 0.353 | +14.9 % | 3.3 $\pm$ 0.12 | 2.3 $\pm$ 0.12 |
| + Alginate (0.1 %); n=16 | 238.0 $\pm$ 3.0 | +0.8 % | 5.524 $\pm$ 0.184 | -14.4 % | 7.872 $\pm$ 0.219 | +2.0 % | 3.6 $\pm$ 0.76 | 2.5 $\pm$ 0.76 |

**Claims**

1.    A farming feed for fish in freshwater, the feed being of a pressed or extruded type and containing starch as an ordinary binder, **characterized in that** besides the content of starch as an ordinary binder, there has been added to the feed up to 25 g per kg of constituent feed ingredients of an algae meal, a calcium aliginate, or guar gum as a faecal binder of a non-starch type.

2.    A farming feed in accordance with claim 1, containing from 1 to 20 g per kg of constituent feed ingredients of an algae meal.

**3.** A farming feed in accordance with claim 2, wherein the concentration of algae meal is from 1 to 5 g per kg of constituent feed ingredients.

**4.** A farming feed in accordance with claim 1, containing from 5 to 15 g per kg of constituent feed ingredients of calcium alginate.

**5.** A farming feed in accordance with claim 4, wherein the concentration of calcium alginate is from 8 to 12 g per kg of constituent feed ingredients.

**6.** A farming feed in accordance with claim 1, containing from 1 to 10 g per kg of constituent feed ingredients of guar gum.

**7.** A farming feed in accordance with claim 6, wherein the concentration of guar gum is from 1 to 5 g per kg of constituent feed ingredients.

**8.** A farming feed in accordance with claim 1, wherein the faecal binder of a non-starch type is a combination of two or more of the binders in the group consisting of algae meal, calcium alginate and guar gum.

**9.** A method for the reduction of the content of undesired nutrients in water discharged from a fish farm, **characterised in that**

- to the feed ingredients mixture for a farming feed of a pressed or extruded type containing starch as an ordinary binder, there is added an addition of up to 25 g per kg of constituent feed ingredients of a faecal binder of a non-starch type which is an algae meal, a calcium alginate, or guar gum;
- the fish is fed the pressed or extruded farming, feed and
- the faeces are removed from the fish farm.

**10.** A method in accordance with claim 9, wherein the faecal binder is a combination of two or more of the binders in the group consisting of algae meal, calcium alginate and guar gum.

**Patentansprüche**

**1.** Futtermittel für die Züchtung von Fischen in Süßwasser, das gepreßt oder extrudiert ist und Stärke als übliches Bindemittel enthält, **dadurch gekennzeichnet, daß** neben der Stärke als übliches Bindemittel dem Futter auch noch bis zu 25 g pro kg Hauptfutterkomponenten Algenmehl, Calciumalginat oder Guargummi als Fäkalbindemittel vom Nicht-Stärke-Typ zugesetzt sind.

**2.** Futtermittel nach Anspruch 1, das 1 bis 20 g eines Algenmehls pro kg Hauptfutterkomponenten enthält.

**3.** Futtermittel nach Anspruch 2, worin die Konzentration des Algenmehls 1 bis 5 g pro kg Hauptfutterkomponenten beträgt.

**4.** Futtermittel nach Anspruch 1, das 5 bis 15 g Calciumalginat pro kg Hauptfutterkomponenten enthält.

**5.** Futtermittel nach Anspruch 4, worin die Konzentration an Calciumalginat 8 bis 12 g pro kg Hauptfutterkomponenten beträgt.

**6.** Futtermittel nach Anspruch 1, das 1 bis 10 g Guargummi pro kg Hauptfutterkomponenten enthält.

**7.** Futtermittel nach Anspruch 6, worin die Konzentration an Guargummi 1 bis 5 g pro kg Hauptfutterkomponenten beträgt.

**8.** Futtermittel nach Anspruch 1, worin das Fäkalbindemittel vom Nicht-Stärke-Typ ein Gemisch aus zwei oder mehreren Bindemitteln aus der Gruppe, bestehend aus Algenmehl, Calciumalginat und Guargummi ist.

**9.** Verfahren zur Verminderung des Gehalts an unerwünschten Nährstoffen in aus einer Fischfarm abgeleitetem Wasser, **dadurch gekennzeichnet, daß** man

- dem Gemisch aus Futtermitteln vom gepreßten oder extrudierten Typ zur Züchtung von Fischen, das Stärke als übliches Bindemittel enthält, bis zu 25 g pro kg Hauptfutterkomponenten eines Fäkalbindemittels vom Nicht-Stärke-Typ, das ein Algenmehl, Calciumalginat oder Guargummi darstellt, zusetzt,
- den Fisch mit dem gepreßten bzw. extrudierten Futtermittel füttert, und
- die Fäkalien aus der Fischfarm entfernt.

10. Verfahren nach Anspruch 9, bei dem das Fäkalbindemittel ein Gemisch aus zwei oder mehreren Bindemitteln aus der Gruppe, bestehend aus Algenmehl, Calciumalginat und Guargummi ist.

**Revendications**

1. Nourriture agricole pour poisson en eau douce, la nourriture étant d'un type comprimé ou extrudé et contenant de l'amidon en tant que liant ordinaire, **caractérisée en ce qu'**en plus de la teneur en amidon en tant que liant ordinaire, il a été ajouté à la nourriture jusqu'à 25 g par kg d'ingrédients alimentaires constitutifs composés d'une farine d'algue, d'un alginate de calcium ou d'une gomme de guar en tant que liant fécal de type non-amidon.

2. Nourriture agricole selon la revendication 1, contenant 1 à 20 g par kg d'ingrédients alimentaires constitutifs composés d'une farine d'algue.

3. Nourriture agricole selon la revendication 2, dans laquelle la concentration en farine d'algue est de 1 à 5 g par kg d'ingrédients alimentaires constitutifs.

4. Nourriture agricole selon la revendication 1, contenant 5 à 15 g par kg d'ingrédients alimentaires constitutifs composés d'alginate de calcium.

5. Nourriture agricole selon la revendication 4, dans laquelle la concentration en alginate de calcium est de 8 à 12 g par kg d'ingrédients alimentaires constitutifs.

6. Nourriture agricole selon la revendication 1, contenant 1 à 10 g par kg d'ingrédients alimentaires constitutifs composés de gomme de guar.

7. Nourriture agricole selon la revendication 6, dans laquelle la concentration en gomme de guar est de 1 à 5 g par kg d'ingrédients alimentaires constitutifs.

8. Nourriture agricole selon la revendication 1, dans laquelle le liant fécal de type non-amidon est une combinaison de deux ou plusieurs des liants du groupe constitué par une farine d'algue, l'alginate de calcium et la gomme de guar.

9. Procédé de réduction de la teneur en nutriments indésirables dans l'eau déversée par une pisciculture, **caractérisé en ce que**

- au mélange d'ingrédients alimentaires destiné à une nourriture agricole de type comprimé ou extrudé contenant de l'amidon en tant que liant ordinaire, il a été ajouté jusqu'à 25 g par kg d'ingrédients alimentaires constitutifs composés d'un liant fécal de type non-amidon qui est une farine d'algue, un alginate de calcium ou une gomme de guar ;
- le poisson est alimenté avec la nourriture agricole comprimée ou extrudée et
- les matières fécales sont retirées de la pisciculture.

10. Procédé selon la revendication 9, dans laquelle le liant fécal est une combinaison de deux ou plusieurs des liants du groupe constitué par une farine d'algue, un alginate de calcium et une gomme de guar.

A) Basic diet        B) Basic diet + guar gum

*Fig. 1*

*Fig. 2*

*Fig. 3*

Fig. 4

**EP 1 744 638 B1**

**Non-patent literature cited in the description**

- **CRIPPS, S. J.** Minimizing outputs: treatment. *Journal of Applied Ichtyology,* 1994, vol. 10, 284-294
- **STOREBAKKEN, T.** Binders in fish feeds. I. Effect of alginate and guar gum on growth, digestibility, feed intake and passage through the gastrointestinal tract of rainbow trout. *Aquaculture,* 1985, vol. 47, 11-26
- **STOREBAKKEN, T.** Binders in fish feeds. II. Effect of different alginates on the digestibility of macronutrients in rainbow trout. *Aquaculture,* 1987, vol. 60, 121-131
- **COUNCIL N.R.** Nutrient requirements of fish, Committee on Animal Nutrition. *Board of Agriculture,* 1993